# EUROPEAN PATENT SPECIFICATION

(11) **EP 0 628 967 B1**
(45) Date of publication and mention of the grant of the patent: **20.05.1998**
(21) Application number: 93500081.0
(22) Date of filing: 11.06.1993
(51) Int. Cl.: G21C 3/10, B67B 1/00

(54) **Nuclear fuel rod plugger**
Einrichtung zum Zustopfen von Kernbrennstoffstäben
Dispositif de bouchage de barreaux de combustible nucléaire

(43) Date of publication of application: 14.12.1994
(73) Proprietor: EMPRESA NACIONAL DEL URANIO, S.A., E-28040 Madrid (ES)
(72) Inventor: Garcia Melgares, Juan, E-37007 Salamanca (ES); Serrano Sanchez, Carlos, E-37003 Salamanca (ES); Izquierdo Gomez, Igancio Javier, E-37005 Salamanca (ES)
(74) Representative: Carpintero Lopez, Francisco

(56) References cited:
- EP-A- 0 201 753
- FR-A- 2 574 214
- PATENT ABSTRACTS OF JAPAN vol. 14, no. 327 (M-998) 13 July 1990 & JP-A-02 110 021

## Description

### OBJECT OF THE INVENTION

The invention relates to a system for plugging the ends of fuel rods used in nuclear reactors, the plugger as such being designed to duly guide each plug from the storage phase to its application onto the appropriate end of the tube forming part of the fuel rod, using pneumatic cylinders and a general mobile support which together cause the plug to move and be guided until assembly on the end of the fuel rod or tube, for the plug to be welded to the respective tube, and be fixed thereto.

The invention basically comprises a plug loading tube in which the latter is placed manually, and takes up a position due to gravity opposite a pneumatic cylinder which on being activated positions the plug opposite a second vertical pneumatic cylinder which by driving the same positions the plug facing the position of final plugging.

In this latter position when a third horizontal pneumatic cylinder, which displaces the whole assembly, including the plug, is activated, it compresses the relevant spring with which it is usually fitted on the top end of the fuel rods and inserts the plug into the tube.

### BACKGROUND OF THE INVENTION

Fuel rods used in nuclear reactors comprise tubes the inside of which carry uranium dioxide tablets which are compressed by a spring provided at the top end of the so-called fuel tube or rod, in order then to proceed with the appropriate plugging, viz. applying a plug which compresses such spring and closes the tube, thereby to determine the fuel rod as such, the plug being held on the end of the tube by welding.

A nuclear fuel rod plugger as disclosed in the preamble of claim 1 is known from EP-A-0 201 753.

It is vital for the plugs to be impervious and mechanically resistant in order to be able to hold the fissile materials. It is also vital for the interface between the plug and the end of the tube to have no defects such as discontinuity, cracks or distortion of the tube, which could lead to leakage. This same standard must be applied to the tube-plug weld.

Plugging the tube is a critical operation due to the high pressure that must be exerted, inasmuch as the positive stress of the spring and the interference there might be between the plug and the tube must be overcome. The said pressure force is usually of around 500 kg, viz. the power to overcome the spring compression and the pressing down of the plug.

It is therefore convenient to use guides to line the plugs with the tube for otherwise possible misalignments or severance would cause strange particles to be deposited in the fuel rod which would affect the mechanical strength of such rods and hence possible later leakage.

Consequently it is particularly important for this plugging stage to perfectly guide the plugs and hold the same within a narrow margin of allowance in order not to cause interference in the system to guide the same.

### DESCRIPTION OF THE INVENTION

The plugger subject of the invention can be said to define a system provided to fit a plug on the upper end of a fuel rod of the kind used in nuclear reactors as disclosed in claim 1.

In this sense it is necessary for the fuel rod to be duly seated and held still during the plugging operation, so that irrespective of these means the system of the invention comprises two essential and basic parts, one being fixed and the other mobile, both seated on a common base, the fixed part including a pneumatic cylinder which actually provides the mobile part of the mechanism with the horizontal movement, basically plugging.

The mobile part carries a seat upon which the plug is positioned, and wherein the protruding end of the spring will be housed together with the end of the tube, the plugging operation taking place subsequently, when the mobile part moves altogether from the furthest to its nearest position, by action of the aforesaid static pneumatic cylinder.

It has also been noted that both the fixed and the mobile parts are mounted upon a main support which includes a base whose position is fixed, the mobile part, which could be designated a carriage, being provided to slide along cylindrical guides anchored onto the main support, which carriage may take up the end and adjacent positions in respect of the stationary position of the end of the fuel rod, where the plug is to be inserted.

The fixed pneumatic cylinder which is the mechanism driving the aforesaid mobile part, includes a rod which will obviously move axially between a stretched and a retracted position to carry out the plugging operations as such.

The mobile carriage is fitted with a plug supplying mechanism which places the same automatically on the supply housing and in a plugged position, viz. positioned and in line with the spring and the fuel bar.

This plug supplying mechanism has an inclined slide through which the plugs are manually loaded, sliding down due to gravity towards the end of a horizontal positioning pneumatic cylinder which on being activated moves the plug to a position in which it is picked up by another vertical positioning pneumatic cylinder, which in turn pushes the same until it reaches its definitive position, prior to plugging, viz. in line with the definitive pushing cylinder, with the spring and with the fuel rod.

Once this position is reached the final plugging movement takes place, in consequence of the movement of the whole carriage through guides located parallel to the position of the fuel bar, and by pneumatic drive by the fixed cylinder.

In short, the stages the plugging process comprises could be summed up as follows:
- Manual loading of the plugs into the inclined slide.
- A first positioning of the plug by means of the horizontal pneumatic cylinder.
- A second positioning of the plug by means of the vertical pneumatic cylinder.
- Insertion of the spring and the end of the tube in the plug housing and final plugging of the tube.

### DESCRIPTION OF THE DRAWINGS

In order to provide a fuller description and contribute to the complete understanding of the characteristics of this invention, a set of drawings is attached to the specification which, while purely illustrative and not fully comprehensive, shows the following:

Figure 1.- Is a view of a diagrammatic section of what could be said to be the basic plugging system subject of the invention.

Figure 2.- Is a perspective view of what could be said to be a materialised embodiment of the plugging system shown in the above figure.

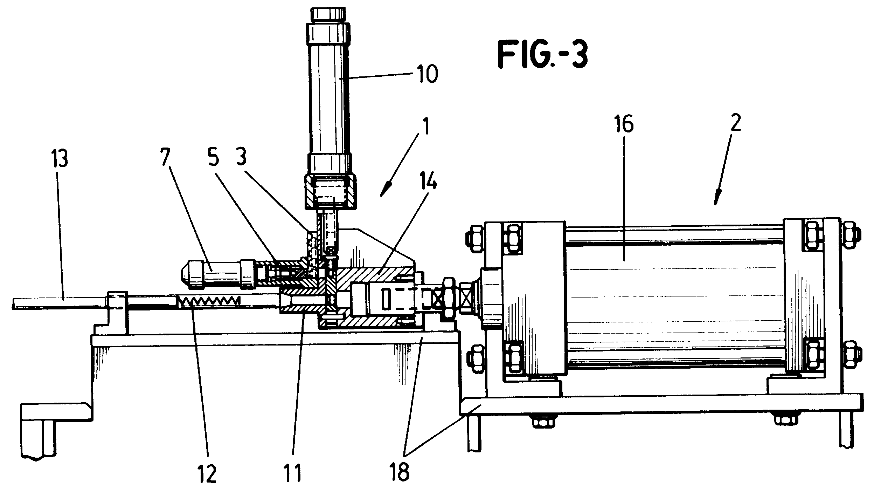

Figure 3.- Is a view of the same plugging system shown in the previous figure, as a side elevation of the assembly with part of it in cross-section, the cross-section being of the elements making up the essential object of the invention.

### PREFERRED EMBODIMENT OF THE INVENTION

As can be observed in the figures, the plugger subject of the invention diagrammatically includes a mobile part (1) and a fixed part (2) so that the mobile part consists of a feeder (3) of plugs (4), a guide (5) upon which a plug is positioned, as number D₁, taken from such store (3) and which is acted upon by a drive (6) of a horizontal drive cylinder (7), in order for the said guide (5) to communicate with another vertical guide (8) to which each of the plugs (4) is driven, from position D₁ to position D₂, which drive is carried out precisely by the drive (6) of the cylinder (7). A drive (9) of a vertical drive cylinder (10) acts in this vertical guide (8) to move the relevant plug (4) from position D₂ to position D₃ where a new guide or nozzle (11) is defined horizontally, which faces the respective spring (12) and end of the tube (13) to be plugged, viz. of the fuel rod as such, the latter remaining static while the aforesaid assembly as a whole is mobile, including a tubular part (14) facing the nozzle (11) in which a drive (15) of a pneumatic cylinder (16), which is fixed, also moves.

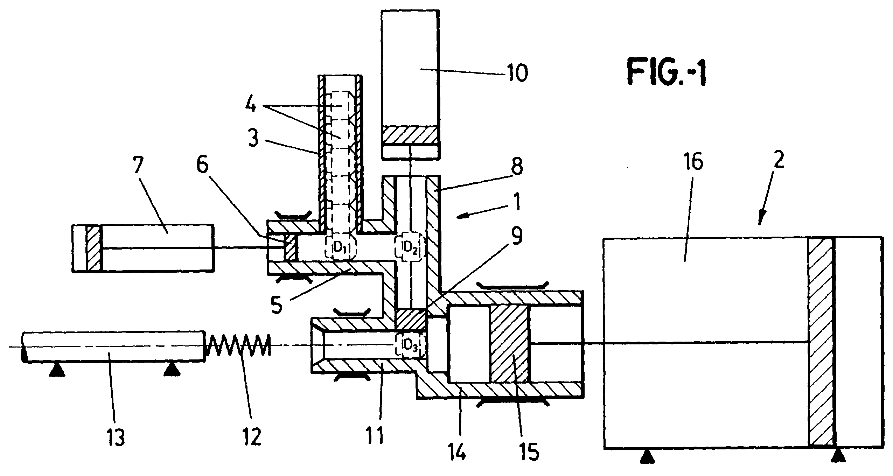

The loader (3) is inclined to foster the dropping or movement due to gravity of the plugs until they reach the guide (5), viz. position D₁ shown in figure 1.

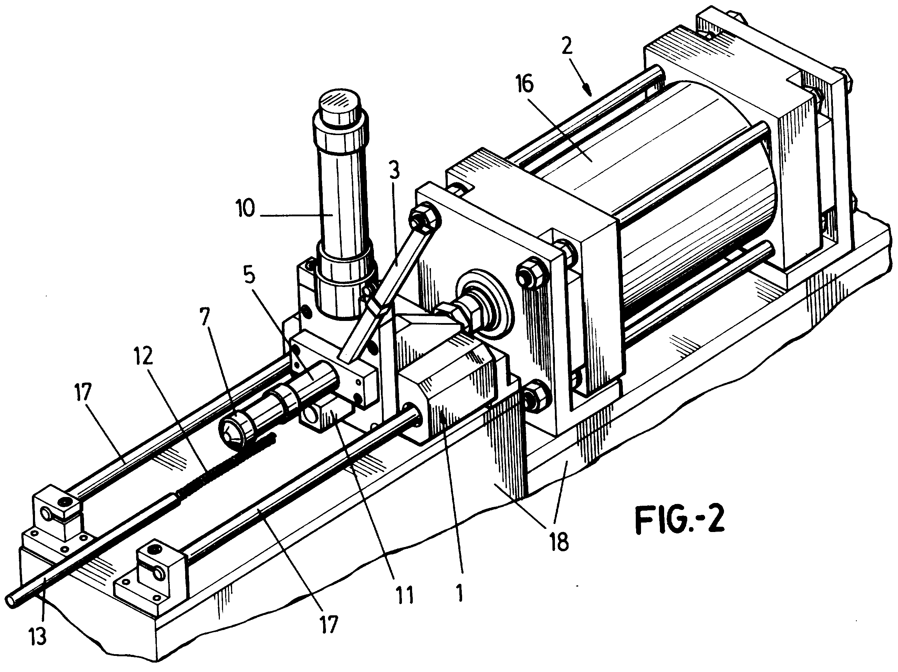

The aforesaid mobile assembly, which could be said to constitute a carriage, moves along horizontal guides (17) and the whole assembly is positioned on a general fixed support (18) as clearly shown in figure 2.

In accordance with this structure, operation is as follows:

The system is designed on the basis of a careful handling of the plugs and of the fuel rods, and the former, that is to say the system, could be deemed to be semi-automatic, with manual stages and automatic stages, for the manual stages actually include placing the fuel rod (13) in the appropriate position, and loading the plugs (4) in the loader (3), and therefore after positioning the fuel rod (13) and loading the loading tube (3) with plugs (4) the other stages could be said to be automatic and obey a pre-set working cycle.

Now then, once the loader (3) has been loaded the lower plug remains in the position marked D₁, with the pneumatic cylinder (7) starting to work thereafter, causing the said plug to move up to position D₂, and once the plug has reached such position, the vertical cylinder (10) shall work causing the plug to move up to position D₃ in which it shall remain as shown in figure 1.

Once the plug is in position D₃ the same faces and is perfectly in line with the spring (12) and with the tube (13) of the fuel rod. It is then when the fixed pneumatic cylinder (16) starts to work to cause the whole plugging assembly generally number (1) to move in order for such movement to bring about the said spring and end of the rod (13) to be housed in the nozzle (11), the relevant plug being driven into the tube (13), pressing the spring (12) all so that the said plug shall be housed in the tube end (13) pressing the spring (12) inside, where the said plug will be fixed by welding.

The piston is then taken from the cylinder (16) and with it all of the plugging assembly (1).

## Claims

1. Nuclear fuel rod plugger, being provided to duly guide the plugs (4) which must close the ends of the tubes (13) making up fuel rods used in nuclear reactors, to house the said plug (4) on the end of the tube (13) in which it is applied, overcoming the force of a relevant spring (12) and precisely provided at the inner end part of the fuel rod tube as such, and comprising a mobile frame (1) which may travel horizontally on parallel guides (17) mounted upon a corresponding general support (18), by the action of a pneumatic cylinder (16) with its corresponding drive element (15), characterised in that in the travelling frame (1) the plugs (4) are individually guided from a loader (3) through a pair of guides (5) and (8) by means of two pneumatic cylinders (7, 10) arranged in said frame (1) until said plugs (4) are arranged in the nozzle (11) through which the fuel tube (13) will be inserted, the plug (4) standing still at all times in such position (D3) with respect to the frame (1), which will move forward to have the end of the tube (13) and spring (12) inserted through the guide (11) until they are coupled to the plug (4).

2. Nuclear fuel rod plugger, as in the above claims, characterised in that the loader (3) for plugs comprises an inclined tube leading into the respective horizontal guide (5) associated with the horizontal drive cylinder (7), singularly characterised in that the drive (6) associated with such cylinder (7) moves the respective lower plug in the loader (3) through the guide (5) until the vertical guide (8) associated with the vertical drive cylinder (10) is reached, the drive (9) in the latter moving the respective plug until the nozzle (11) is reached, facing the spring and the end of the tube (13).

3. Nuclear fuel rod plugger, as in the above claims, characterised in that the cylindrical body (14) in which the drive (15) of the pneumatic cylinder (16) corresponding to the fixed part (2) of the assembly moves, constitutes a rear extension of the actual mobile part or frame (1).

## Patentansprüche

1. Einrichtung zum Zustopfen von Kernbrennstoffstäben für die einwandfreie Führung der Stopfen (4) zum Verschliessen der Enden der Rohre (13), welche die in Kernreaktoren verwendeten Brennstoffstäbe bilden, und zur Anordnung des Stopfens (4) auf dem entsprechenden Rohrende (13) gegen die Kraft einer dazugehörigen Feder (12), die genau am unteren Ende des eigentlichen Rohres des Brennstoffstabes vorgesehen ist, bestehend aus einem beweglichen Gestell (1), das durch die Wirkung des Pneumatikzylinders (16) mit seinem entsprechenden Schubelement (15) waagerecht auf an der entsprechenden Halterung (18) montierten parallelen Führungen (17) gleitet, dadurch gekennzeichnet, dass die Stopfen (4) in dem verschiebbaren Gestell (1) einzeln mit Hilfe pneumatischer Zylinder (7, 10), die sich in diesem Gestell (1) befinden, über ein Führungspaar (5) und (8) von einer Beschickungsvorrichtung (3) aus geführt werden, bis die Stopfen (4) in eine Führung (11) gleiten, über welche der Brennstoffstab (13) eingesetzt wird, wobei der Stopfen (4) stets in bezug auf das Gestell (1) unbeweglich in dieser Stellung (D3) verweilt, während das Gestell vorrückt, um das Rohrende (13 und die Feder (12) über die Führung (11) bis zur Verbindung mit dem Stopfen (4) einzuführen.

2. Einrichtung zum Zustopfen von Kernbrennstoffstäben, nach dem vorstehenden Anspruch dadurch gekennzeichnet, dass die Vorrichtung (3) für die Aufgabe der Stopfen aus einem geneigten Rohr besteht, das in einer entsprechenden horizontalen Führung (5) mündet, die mit dem horizontal betätigten Zylinder (7) in Verbindung steht, und zwar mit der Besonderheit, dass der mit diesem Zylinder (7) verbundene Schieber (6) den unteren Stopfen der Beschickungsvorrichtung (3) über diese Führung (5) vorschiebt, bis er die senkrechte, mit dem vertikalen Betätigungszylinder (10) verbundene Führung (8) erreicht, wobei der Schieber (9)desselben den jeweiligen Stopfen verschiebt, bis dieser die Düse (11) erreicht, die der Feder und dem Rohrende (13) gegenüberliegt.

3. Einrichtung zum Zustopfen von Kernbrennstoffstäben, nach den vorangehenden Ansprüchen dadurch gekennzeichnet, dass der zylindrische Körper (14), in dem der Schieber (15) des dem festen Teil (2) der Einheit entsprechenden Pneumatikzylinders (16) eine hintere Verlängerung des Teils bzw- des beweglichen Gestells (1) bildet.

## Revendications

1. Dispositif de bouchage de barreaux de combustible nucléaire, qui, alors qu'ont été prévus pour le glissement correct les bouchons (4) qui doivent fermer les extrémités des tuyaux (13) qui constituent les barreaux de combustible utilisés dans des réacteurs nucléaires, et effectuer le logement de ce bouchon-là (4) sur l'extrémité du tuyau (13) où on l'appliquera, en maîtrisant la force d'un ressort (12) correspondant et prévu précisément à la partie extrême intérieure du propre tuyau du barreau de combustible et comprenant un bâti mobile (1) qui peut se déplacer horizontalement sur des glissières parallèles (17) montées sur le support général (18) correspondant, moyennant l'action d'un cylindre pneumatique (16) avec son élément correspondant de poussée (15), se caractérise par le fait que dans le bâti déplaçable (1) les bouchons (4) sont glissés individuellement à partir d'un chargeur (3) à travers deux glissières (5) et (8) à l'aide des cylindres pneumatiques (7, 10) correspondants placés dans ce bâti (1) jusqu'à ce que ces bouchons (4) soient placés dans la glissière (11) à travers laquelle sera introduit le tuyau de combustible (13), le bouchon (4) restant à tout moment immobile dans cette position-là (D3) par rapport au bâti (1), qui avancera pour faire introduire l'extrémité du tuyau (13) et le ressort (12) à travers la glissière (11) jusqu'à son accouplement avec le bouchon (4).

2. Dispositif de bouchage de barreaux de combustible nucléaire, selon les revendications précédentes, qui se caractérise par le fait que le chargeur (3) de bouchons soit composé d'un tuyau en position penchée qui aboutit à la glissière horizontale (5) correspondante associée au cylindre (7) d'actionnement horizontal, avec la particularité que le poussoir (6) associé à ce cylindre-là (7) déplace le bouchon inférieur correspondant du chargeur (3) à travers cette glissière-là (5) jusqu'à arriver à la glissière verticale (8) associée au cylindre d'actionnement vertical (10), le bouchon respectif déplaçant le poussoir (9) de ce dernier jusqu`à arriver à la tuyère (11) face au ressort et à l'extrémité du tuyau (13).

3. Dispositif de bouclage de barreaux de combustible nucléaire, selon des revendications précédentes, caractérisé par le fait que le corps cylindrique (14) où se déplace le poussoir (15) du cylindre pneumatique (16) correspondant à la partie fixe (2) de l'ensemble constitue un prolongement postérieur de la partie même ou du bâti mobile (1).
